# EUROPEAN PATENT SPECIFICATION

(11) **EP 0 855 138 B1**
(45) Date of publication and mention of the grant of the patent: **12.12.2001**
(21) Application number: 98105857.1
(22) Date of filing: 16.07.1993
(51) Int. Cl.: A01N 53/00

(54) **Insecticidal composition**
Insektizide Zusammensetzung
Compositon insecticide

(30) Priority: 17.07.1992 JP 19067692; 17.07.1992 JP 19067792
(43) Date of publication of application: 29.07.1998
(62) Divisional of application: 93111444.1
(73) Proprietor: SUMITOMO CHEMICAL COMPANY, LIMITED, Chuo-ku, Osaka 305 (JP)
(72) Inventor: Tanaka, Yasunori, Minoo-shi (JP); Matsunaga, Tadahiro, Kita-ku, Kobe-shi (JP)
(74) Representative: VOSSIUS & PARTNER

(56) References cited:
- DE-A- 2 738 878
- GB-A- 2 002 635
- US-A- 4 889 872

## Description

The present invention relates to a novel insecticidal composition, in particular, an insecticidal composition suitable for heating fumigation.

The specification of U.S. Patent No. 4,889,872 describes 2,3,5,6-tetrafluorobenzyl (+)-1R, trans-2,2-dimethyl-3-(2,2-dichlorovinyl)cyclopropanecarboxylate (referred to hereinafter as "benfluthrin") as having insecticidal activity.

However, when benfluthrin is used in the form of an insecticidal composition for heating fumigation, it has been difficult to obtain a stable insecticidal effect for a long period of time.

To avoid this disadvantage of the prior art it has been found according to the present invention that an insecticidal composition comprising benfluthrin and at least one monovalent or divalent fatty acid ester having a total number of carbon atoms of 18 to 26 (said composition being referred to hereinafter as "present inventive composition") exhibits a stable effect for a long period of time when applied for heating fumigation.

Therefore, one object of the present invention is to provide a novel insecticidal composition.

Another object of the present invention is to provide an insecticidal composition which exhibits a stable insecticidal effect for a long period of time as an insecticidal composition for heating fumigation.

A further object is to provide a method for controlling pest insects by heating fumigation of the above insecticidal composition.

According to the present invention, there are provided an insecticidal composition comprising 2,3,5,6-tetrafluorobenzyl (+)-1R, trans-2,2-dimethyl-3-(2,2-dichlorovinyl)cyclopropanecarboxylate as insecticidally active ingredient, and at least one monovalent or divalent fatty acid ester having a total number of carbon atoms of 18 to 26;
and an insecticidal composition for heating fumigation comprising 2,3,5,6-tetrafluorobenzyl (+)-1R, trans-2,2-dimethyl-3-(2,2-dichlorovinyl)cyclopropanecarboxylate, a monovalent or divalent fatty acid ester having a total number of carbon atoms of 18 to 26, and a fibrous carrier, being 2,3,5,6-tetrafluorobenzyl (+)-1R, trans-2,2-dimethyl-3-(2,2-dichlorovinyl)cyclopropanecarboxylate and the monovalent or divalent fatty acid ester supported on the fibrous carrier.

As the monovalent or divalent fatty acid ester having a total number of carbon atoms of 18 to 26 used in the present invention, there can be exemplified monovalent fatty acid esters such as ethyl stearate (total number of carbon atoms: 20) or butyl stearate (total number of carbon atoms: 22); and divalent fatty acid diesters such as dibutyl sebacate (total number of carbon atoms: 18) or dioctyl sebacate (total number of carbon atoms: 26). Of the fatty acid esters, those having a total number of carbon atoms of 18 to 20, such as ethyl stearate. or dibutyl sebacate are preferable.

Usually, the mixing ratio of benfluthrin to the aforesaid monovalent or divalent fatty acid ester is approximately 1 : 2 to 1 : 50 by weight, preferably approximately 1 : 4 to 1 : 25 by weight.

The present inventive composition can be used in the form of a composition suitable for heating fumigation. Such a composition suitable for heating fumigation can be obtained by supporting, on a fibrous carrier, either a combination of benfluthrin and the above-mentioned ester, or a mixture of benfluthrin, the above-mentioned ester and, optionally, a diluent, synergist, stabilizer, dyestuff, perfume, other insecticidally active ingredients, etc., by impregnation or the like. As the fibrous carrier used, there can be exemplified fibrous carriers consisting of one of or a combination of cellulose (e.g. paper and pulp), vegetable fiber (e.g. cotton), animal fiber (e.g. wool), glass fiber and synthetic fiber. For example, a fibrous carrier with a thickness of 1 to 4 mm, preferably 1.5 to 3 mm is used by supporting thereon benfluthrin and the above-mentioned ester in total amounts of 0.6 - 4.0 mg/cm² and 5 - 30 mg/cm², respectively, by impregnation or the like.

For example, when the above-mentioned ester has too high a viscosity and is difficult to handle as it is, a solvent such as paraffin may be added if necessary.

The present inventive composition obtained in the manner described above is suitable for heating fumigation. For example, it is suitable for application by vaporization of the insecticidal ingredient by means of an electric fumigator capable of heating said composition to 130 - 170°C.

The present inventive composition is effective against the various pest insects controllable by the use of benfluthrin which are described in the specification of U.S. Patent No. 4,889,872. It is effective particularly in controlling pest insects such as flies, mosquitoes, etc. by heating fumigation.

The present invention is concretely illustrated by the following formulation examples, referential examples and test examples.

### Formulation Example A

With 10 mg of benfluthrin was mixed 140 mg of dibutyl phthalate, and 50 mg of IP Solvent 2028 (composed mainly of isoparaffin, mfd. by Idemitsu Petrochemical Co.) was added to the resulting mixture to obtain a solution. A 22 mm x 35 mm x 2.8 mm fibrous plate (800 mg) composed of pulp and cotton was impregnated with said solution to obtain composition (A).

### Formulation Example 1

Present inventive composition (1) was obtained in exactly the same manner as in Formulation Example A, except that 140 mg of dibutyl sebacate was used in place of 140 mg of dibutyl phthalate.

### Formulation Example 2

Present inventive composition (2) was obtained in exactly the same manner as in Formulation Example A, except that 140 mg of ethyl stearate was used in place of 140 mg of dibutyl phthalate.

### Formulation Example 3

Present inventive composition (3) was obtained in exactly the same manner as in Formulation Example A, except that 140 mg of dioctyl sebacate was used in place of 140 mg of dibutyl phthalate.

### Formulation Example 4

Present inventive composition (4) was obtained in exactly the same manner as in Formulation Example A, except that 140 mg of butyl stearate was used in place of 140 mg of dibutyl phthalate.

### Referential Example 1

To 10 mg of benfluthrin was added 190 mg of IP Solvent 2028 to obtain a solution. A 22 mm × 35 mm × 2.8 mm fibrous plate (800 mg) composed of pulp and cotton was impregnated with said solution to obtain reference composition (1).

### Referential Example 2

Reference composition (2) was obtained in exactly the same manner as in Referential Example 1, except that the amounts of benfluthrin and IP Solvent 2028 were changed to 20 mg and 180 mg, respectively.

### Referential Example 3

Reference composition (3) was obtained in exactly the same manner as in Referential Example 1, except that the amounts of benfluthrin and IP Solvent 2028 were changed to 30 mg and 170 mg, respectively.

### Referential Example 4

Reference composition (4) was obtained in exactly the same manner as in Formulation Example A, except that 140 mg of diethyl sebacate was used in place of 140 mg of dibutyl phthalate.

### Referential Example 5

Reference composition (5) was obtained in exactly the same manner as in Formulation Example A, except that 140 mg of butyl laurate was used in place of 140 mg of dibutyl phthalate.

### Referential Example 6

Reference composition (6) was obtained in exactly the same manner as in Formulation Example A, except that 140 mg of isopropyl myristate was used in place of 140 mg of dibutyl phthalate.

### Test Example 1

Each composition to be tested was set on an electric fumigator capable of heating the composition to 160 - 170°C, and the electric fumigator was covered with a glass funnel. One end of a column for sampling which had been packed with 5.0 g of silica gel and closed with absorbent wadding plugs in the upper and lower parts was connected to the funnel, and the other end of the column was connected to a suction pump. Simultaneously with the start of electric current supply to the electric fumigator, suction was initiated so as to adjust the air suction rate to 2.0 liters/min, by use of the suction pump.

At definite times after the start of the electric current supply to the electric fumigator, vapor adsorbed on the silica gel and vapor adhering to the inner walls of the column and the funnel were eluted with acetone and then washed with acetone, whereby benfluthrin as active ingredient was collected. The amount of benfluthrin vaporized was measured by a gas chromatography.

Table 1 shows the vaporization rates of benfluthrin from 0 to 4 hours and from 4 to 8 hours after the start of the electric current supply, and the amount of benfluthrin remaining in each insecticidal composition 8 hours after the start of electric current supply.

**Table 1**

| | | Time elapsed, after supplying electric current and vaporization rate (mg/hr) | | Residual amount in a composition (mg) |
|---|---|---|---|---|
| | | 0-4 hrs | 4-8 hrs | |
| Present inventive composition | (1) | 0.8 | 0.6 | 3.0 |
| | (2) | 1.1 | 0.6 | 2.3 |
| | (3) | 1.6 | 0.9 | 2.2 |
| | (4) | 2.0 | 0.9 | 2.0 |
| Reference composition | (1) | 2.3 | 0 | 0 |
| | (2) | 4.3 | 0.1 | 0 |
| | (3) | 7.1 | 0.4 | 0 |
| | (4) | 1.8 | 0.3 | 0 |
| | (5) | 2.2 | 0.1 | 0 |
| | (6) | 2.4 | 0.2 | 0 |

It can be speculated that the present inventive compositions containing a specified ester act effectively for a relatively long period of time because the vaporization rate of benfluthrin is reduced as shown in Table 1. On the other hand, reference compositions (1), (2) and (3) containing no ester and reference compositions (4), (5) and (6) containing a fatty acid ester having a total number of carbon atoms of 14, 16 or 17, respectively, are hardly able to maintain a constant insecticidal effect for a long period of time because a large portion of benfluthrin as active ingredient is vaporized in the early stages.

## Claims

1. An insecticidal composition comprising 2,3,5,6-tetrafluorobenzyl (+)-1R, trans-2,2-dimethyl-3-(2,2-dichlorovinyl)cyclopropanecarboxylate as insecticidally active ingredient, and at least one monovalent or divalent fatty acid ester having a total number of carbon atoms of 18 to 26.

2. An insecticidal composition according to Claim 1 comprising 2,3,5,6-tetrafluorobenzyl (+)-1R, trans-2,2-dimethyl-3-(2,2-dichlorovinyl)cyclopropanecarboxylate, a monovalent or divalent fatty acid ester having a total number of carbon atoms of 18 to 26, and a fibrous carrier, being 2,3,5,6-tetrafluorobenzyl (+)-1R, trans-2,2-dimethyl-3-(2,2-dichlorovinyl)cyclopropanecarboxylate and the monovalent or divalent fatty acid ester supported on the fibrous carrier.

3. The insecticidal composition according to Claim 2, wherein the total number of carbon atoms of the monovalent or divalent fatty acid ester is 18 to 20.

4. The insecticidal composition according to Claim 2 or 3, wherein the thickness of said fibrous carrier is 1 to 4 mm, 2,3,5,6-tetrafluorobenzyl (+)-1R, trans-2,2-dimethyl-3-(2,2-dichlorovinyl)cyclopropanecarboxylate is supported on said fibrous carrier in an amount of 0.6 to 4.0 mg per cm² of said fibrous carrier, and the monovalent or divalent fatty acid ester is supported on said fibrous carrier in an amount of 5 to 30 mg per cm² of said fibrous carrier.

5. The insecticidal composition according to any one of Claims 2 to 4, wherein the monovalent or divalent fatty acid ester is a stearic ester or dibutyl sebacate.

6. A method for controlling pest insects by heating fumigation of the insecticidal composition of any one of Claims 1 to 5.

## Patentansprüche

1. Insektizides Mittel, umfassend 2,3,5,6-Tetrafluorbenzyl-(+)-1R,trans-2,2-dimethyl-3-(2,2-dichlorvinyl)cyclopropancarboxylat als insektiziden Wirkstoff und mindestens einen einwertigen oder zweiwertigen Fettsäureester mit einer Gesamtzahl von 18 bis 26 Kohlenstoffatomen.

2. Insektizides Mittel nach Anspruch 1, umfassend 2,3,5,6-Tetrafluorbenzyl-(+)-1R,trans-2,2-dimethyl-3-(2,2-dichlorvinyl)cyclopropancarboxylat, einen einwertigen oder zweiwertigen Fettsäureester mit einer Gesamtzahl von 18 bis 26 Kohlenstoffatomen, und einen faserförmigen Träger, wobei 2,3,5,6-Tetrafluorbenzyl-(+)-1R,trans-2,2-dimethyl-3-(2,2-dichlorvinyl)cyclopropancarboxylat und der einwertige oder zweiwertige Fettsäureester auf den faserförmigen Träger aufgetragen sind.

3. Insektizides Mittel nach Anspruch 2, wobei die Gesamtzahl der Kohlenstoffatome des einwertigen oder zweiwertigen Fettsäureesters 18 bis 20 beträgt.

4. Insektizides Mittel nach Anspruch 2 oder 3, wobei die Dicke des faserförmigen Trägers 1 bis 4 mm beträgt, 2,3,5,6-Tetrafluorbenzyl-(+)-1R,trans-2,2-dimethyl-3-(2,2-dichlorvinyl)cyclopropancarboxylat auf den faserförmigen Träger in einer Menge von 0,6 bis 4,0 mg pro cm² des faserförmigen Trägers aufgebracht ist und der einwertige oder zweiwertige Fettsäureester auf den faserförmigen Träger in einer Menge von 5 bis 30 mg pro cm² des faserförmigen Trägers aufgebracht ist.

5. Insektizides Mittel nach einem der Ansprüche 2 bis 4, wobei der einwertige oder zweiwertige Fettsäureester ein Stearinsäureester oder Sebacinsäuredibutylester ist.

6. Verfahren zur Bekämpfung von Schadinsekten durch Heizräuchern des insektiziden Mittels nach einem der Ansprüche 1 bis 5.

## Revendications

1. Composition insecticide comprenant du (+)-1R,trans-2,2-diméthyl-3-(2,2-dichlorovinyl)cyclopropanecarboxylate de 2,3,5,6-tétrafluorobenzyle en tant qu'ingrédient insecticidement actif, et au moins un ester monovalent ou divalent d'acide gras ayant un nombre total d'atomes de carbone de 18 à 26.

2. Composition insecticide selon la revendication 1, comprenant du (+)-1R,trans-2,2-diméthyl-3-(2,2-dichlorovinyl) cyclopropanecarboxylate de 2,3,5,6-tétrafluorobenzyle, un ester monovalent ou divalent d'acide gras ayant un nombre total d'atomes de carbone de 18 à 26, et un support fibreux, le (+)-1R, trans-2,2-diméthyl-3-(2,2-dichlorovinyl)cyclopropanecarboxylate de 2,3,5,6-tétrafluorobenzyle et l'ester monovalent ou divalent d'acide gras étant supportés sur le support fibreux.

3. Composition insecticide selon la revendication 2, dans laquelle le nombre total d'atomes de carbone de l'ester monovalent ou divalent d'acide gras est de 18 à 20.

4. Composition insecticide selon la revendication 2 ou 3, dans laquelle l'épaisseur dudit support fibreux est de 1 à 4 mm, le (+)-1R,trans-2,2-diméthyl-3-(2,2-dichlorovinyl)cyclopropanecarboxylate de 2,3,5,6-tétrafluorobenzyle est supporté sur ledit support fibreux en une quantité de 0,6 à 4,0 mg par cm² dudit support fibreux, et l'ester monovalent ou divalent d'acide gras est supporté sur ledit support fibreux en une quantité de 5 à 30 mg/cm² dudit support fibreux.

5. Composition insecticide selon l'une quelconque des revendications 2 à 4, dans laquelle l'ester monovalent ou divalent d'acide gras est un ester stéarique ou le sébaçate de dibutyle.

6. Procédé pour lutter contre des insectes nuisibles par fumigation chauffante de la composition insecticide selon l'une quelconque des revendications 1 à 5.
